# EUROPÄISCHE PATENTSCHRIFT

(11) **EP 0 754 082 B1**
(45) Veröffentlichungstag und Bekanntmachung des Hinweises auf die Patenterteilung: **14.11.2001**
(21) Anmeldenummer: 96902929.7
(22) Anmeldetag: 26.01.1996
(51) Int. Cl.: B01D 3/10, B01D 5/00, G01N 1/44, G01N 1/40

(54) **VERFAHREN UND VORRICHTUNG ZUR EXTRAKTIONS-BEHANDLUNG EINER PROBE**
METHOD AND DEVICE FOR THE EXTRACTION TREATMENT OF A SAMPLE
PROCEDE ET APPAREIL DE TRAITEMENT D'EXTRACTION D'UN ECHANTILLON

(30) Priorität: 03.02.1995 DE 19503591
(43) Veröffentlichungstag der Anmeldung: 22.01.1997
(73) Patentinhaber: LAUTENSCHLÄGER, Werner, D-88200 Leutkirch (DE)
(72) Erfinder: LAUTENSCHLÄGER, Werner, D-88200 Leutkirch (DE)
(74) Vertreter: Schmidt-Evers, Jürgen, Dipl.-Ing.
(86) Internationale Anmeldenummer: EP9600329
(87) Internationale Veröffentlichungsnummer: WO9623565

(56) Entgegenhaltungen:
- WO-A-93/22650
- DE-U- 9 311 578
- GB-A- 1 509 997
- US-A- 4 209 914

## Beschreibung

Die Erfindung betrifft die Extraktions-Behandlung von flüssigen oder insbesondere festen Proben, in denen ein Stoff gebunden ist. Dieser Stoff soll durch die Extraktionsbehandlung extrahiert d.h. herausgelöst oder herausgewaschen werden. Zur Extraktion wird ein gasförmiges oder insbesondere flüssiges Lösungsmittel verwendet. Eine Extraktion mit Gas findet beispielsweise beim "Trocknen" einer Probe statt. Hier dient ein Inertgas oder Luft als Transportmittel für Wasserdampf der sich beim Erhitzen der Probe in dieser aus dem in der Probe gebundenen Wasser bildet.

Bei der Extraktion im Laborbereich wird in der Regel mit einem (bei Normaldruck) flüssigen Lösungsmittel gearbeitet. Das flüssige Lösungsmittel wird dazu in einem beheizbaren Raum mit der Probe in Kontakt gebracht. Der beheizbare Raum kann ein mit Mikrowelle beheizbarer Ofen sein. Die Heizung ist deshalb zweckmäßig oder sogar notwendig, weil der zu extrahierende Stoff in der Regel sich bei höheren Temperaturen leichter aus der Probe herauslösen läßt und weil das Lösungsmittel bei höheren Temperaturen eine größere Menge von dem zu extrahierenden Stoff aufnehmen kann (Lösungsfähigkeit steigt mit der Temperatur).

Da das Lösungsmittel teuer und in den meisten Fällen toxisch (giftig) ist, ist man aus Gründen der Wirtschaftlichkeit und/oder zwecks Vermeidung von Umwelt- oder Gesundheitsschäden bemüht, das Lösungsmittel nach einer Extraktions-Behandlung wiederzugewinnen. Ein bekanntes Verfahren und eine bekannte Vorrichtung hierzu sind in der DE 42 23 116 A1 beschrieben. Bei diesem bekannten Verfahren bzw. Vorrichtung wird der beheizbare Raum mittels einer nach außerhalb der Heizvorrichtung zu einer Pumpe führenden Absaugleitung abgesaugt, wobei das abgesaugte gasförmige Lösungsmittel zunächst in einem Kondensat-Kühler abgekühlt und - soweit dies der Absaug-Unterdruck zuläßt - in die flüssige Phase überführt, bevor es zur Pumpe gelangt. Das dadurch wiedergewonnene Lösungsmittel-Kondensat, welches sich in dem Kondensat-Kühler unter Unterdruck befindet, kann nach Abschaltung des Prozesses wieder auf normalen Druck gesetzt und erneut für eine Extraktions-Behandlung wiederverwendet werden. Es wird dazu in einem Lösungsmittelbehälter gegeben, aus dem dann eine Lösungsmittelpumpe, z.B. eine Schlauchpumpe, das Lösungsmittel absaugt und in den beheizbaren Raum einführt, vorzugsweise so, daß das Lösungsmittel auf die Probe träufelt.

Bei diesem bekannten Verfahren bzw. Vorrichtung ist es wesentlich, daß die Pumpe, die den Unterdruck beim Absaugen des Lösungsmittels aus dem beheizbaren Raum erzeugt, in Strömungsrichtung nach dem Kondensat-Kühler angeordnet ist. Am Ausgang der Pumpe herrscht Atmosphärendruck.

Ein Nachteil dieser bekannten Technik besteht darin, daß der Wirkungsgrad für die Rückgewinnung des Lösungsmittels gering ist.

Aus der DE 41 14 525 A1 und aus der älteren Patentanmeldung der Anmelderin P 44 09 887.4 sind jeweils ein Verfahren und eine Vorrichtung zum Extrahieren von Proben zu entnehmen, wobei die Extraktion zum einen in einem druckfesten Behälter bei Überdruck und zum anderen mittels eines im Druckbehälter angeordneten Soxhlet-Apparates in einem zum einen auf den Innnenraum des Druckbehälters beschränkten und zum anderen auch zeitlich beschränkten Kreislauf erfolgt. Bei dieser Technik gelangt das Lösungsmittel von oben auf die in einem besonderen Probenbehälter eingegebene Probe, wobei das mit dem extrahierten Stoff angereicherte Lösungsmittel durch einen unteren Durch- oder Auslaß dieses Probenbehälters in einen sich unterhalb der Probe befindlichen Raum strömt und sich dort sammelt. Im weiteren wird bei dieser Technik das Lösungsmittel mit dem zu extrahierenden Stoff mittels des Soxhlet-Apparates im internen Kreislauf bewegt und in starkem Maße mit dem extrahierten Stoff angereichert. Hierbei wird das sich unterhalb der Probe befindliche Lösungsmittel erhitzt und damit verdampft, und der aufsteigende Lösungsmitteldampf wird oberhalb der Probe durch eine Kühleinrichtung kondensiert, wodurch er wieder in flüssiger Form auf die Probe tropft und aus dieser erneut den zu extrahierenden Stoff herauslöst. Bei dieser bekannten Technik entsteht in dem Druckbehälter aufgrund der Erhitzung und der Verdampfung von in der Probe enthaltenen verdampfungsfähigen Stoffen und des Lösungsmittels ein Überdruck. Dieser Überdruck ist eine Folge der Erhitzung, die den Zweck erfüllt, zum einen die Probe zu erhitzen und dadurch die Extraktion zu forcieren und zum anderen das Lösungsmittel zu verdampfen um den internen Kreislauf zu ermöglichen. Wenn das Lösungsmittel gesättigt ist, muß es außerhalb des beheizbaren Raumes in einem gesonderten Prozeß wieder von dem darin gelösten Stoff getrennt und/oder entsorgt werden. Die Trennung in einem separaten Prozeß und die Entsorgung sind insbesondere dann problematisch, wenn das Lösungsmittel toxisch ist. Die Entsorgung ist ferner aus Gründen des Umweltschutzes und der Wirtschaftlichkeit erwünscht. Insbesondere für den Fall, daß das Lösungsmittel teuer und/oder toxisch ist, ist man daher bemüht, das Lösungsmittel in einem Prozeß wiederzugewinnen, der unmittelbar mit der Extraktion gekoppelt ist. Dies ist zwar mit der aus der vorgenannten DE 42 23 116 A1 und der älteren Patentanmeldung P 44 19 648.2 entnehmbaren Technik zwar möglich, jedoch ist der dabei erreichbare Wirkungsgrad gering.

Der Erfindung liegt daher die Aufgabe zugrunde, eine Extraktions-Einrichtung zu schaffen, welche eine möglichst umgehende Rückgewinnung des Lösungsmittels mit einfachen Mitteln gewährleistet.

Die Lösung dieser Aufgabenstellung besteht erfindungsgemäß darin, daß die Absaugpumpe für den in dem beheizbaren Raum befindlichen Lösungsmitteldampf dem Kondensat-Kühler in Strömungsrichtung vorgeschaltet wird, so daß in dem beheizbaren Raum weiterhin Unterdruck, in dem Kondensat-Kühler jedoch erhöhter Druck herrscht. Durch den erhöhten Druck in dem Kondensat-Kühler hat der Lösungsmittel-Dampf die Tendenz bei gleichbleibender Kühltemperatur verstärkt in die flüssige Phase überzugehen, mit der Folge, daß wesentlich mehr flüssiges Lösungsmittel in dem Kondensat-Kühler gewonnen wird, als mit dem bekannten Verfahren. Hierdurch wird der Wirkungsgrad vergrößert. Das Lösungsmittel kann unter Weglassung des Lösungsmittel-Gefäßes direkt, vorzugsweise mittels einer Pumpe, der Probe zugeführt werden, wobei in Strömungsrichtung vor der Pumpe ein Überdruck herrschen kann, da die Pumpe, welche als Schlauchpumpe ausgebildet sein kann, wie ein Bauteil mit Ventil wirkung wirkt. Das bedeutet, daß am Ausgang der Pumpe trotz Förderwirkung der Pumpe ein niedrigerer Druck herrschen kann als an ihrem Eingang. Dies ist auch erforderlich, da der Ausgang der Pumpe in den die Probe enthaltenen heizbaren Raum geführt ist und letzterer mit der Absaugleitung für den Lösungsmitteldampf verbunden ist.

Dem gegenüber ist bei dem vorbeschriebenen Stand der Technik der Wirkungsgrad deshalb gering, weil in dem Kondensat-Kühler Unterdruck herrscht, d.h. das Lösungsmittel hat auch bei den relativ niedrigen Temperaturen in dem Kühler die Tendenz, wegen des Unterdrucks weitgehend in der dampfförmigen Phase zu verharren. Das hat nicht nur zur Folge, daß das trotzdem abgeschiedene Lösungsmittel dem Extraktionsprozeß (nach Art eines geschlossenen Kreislaufs) nicht wieder direkt zugeführt werden kann (der Lösungsmittelbehälter, aus dem die Lösungsmittelpumpe fördert, steht unter Normaldruck), sondern zusätzlich den Nachteil, daß nach der dem Kondensat-Kühler nachgeschalteten Vakuumpumpe ein stark mit Lösungsmittel-Dampf angereichertes Gas in die Atmosphäre austritt. Dies ist jedenfalls dann nicht akzeptabel, wenn das Lösungsmittel toxisch ist. Um dem zu begegnen, könnte man der Vakuumpumpe einen weiteren bei Atmosphärendruck arbeitenden Kondensat-Kühler nachgeschaltet, in dem dann das noch reichhaltig in dem Gas enthaltene dampfförmige Lösungsmittel zurückgewonnen werden kann. Der dadurch bedingte Mehraufwand ist jedoch erheblich und unerwünscht.

In den Unteransprüchen sind Verfahrens- und Vorrichtungsmerkmale enthalten, die die Funktion, die Leistungsfähigkeit, die Wirtschaftlichkeit und die Umweltfreundlichkeit der Vorrichtung weiter verbessern und zu einfachen und kostengünstigen herstellbaren Ausgestaltungen führen und außerdem eine indirekte Beheizung der Probe und/oder des Lösungsmittels ermöglichen.

Nachfolgend werden die Erfindung und weitere durch sie erzielbare Vorteile anhand von Ausführungsbeispielen und einer Zeichnung näher erläutert.

Die Hauptteile der allgemein mit 1 bezeichneten Vorrichtung 1 sind ein vorzugsweise mit Mikrowellenstrahlung wirksames Heizgerät 2 mit einer Heizkammer 3 in einem Gehäuse 3a, die durch eine Tür oder dergleichen verschließbar ist, wenigstens ein oder vorzugsweise mehrere Probenbehälter 4, die entweder direkt in die Heizkammer 3 einstellbar sind oder auf einen in der Heizkammer 3 angeordneten und vorzugsweise drehbaren Halter 3b mit Stellplätzen für die Probenbehälter 4 einstellbar sind, eine Absaugvorrichtung 5 zum Absaugen von Dämpfen aus dem oder den Probenbehältern 4, eine der Absaugvorrichtung 5 nachgeschalteten Kondensationsvorrichtung 6 zum Kondensieren des Dampfes oder der Dämpfe, einer Kondensat-Rückführungsvorrichtung 7 zum Rückführen des Kondensats in den oder die Probenbehälter 4, eine Gas-Zuführungsvorrichtung 8 zum Zuführen eines Spülgases, z.B. Luft oder Inertgas in den oder die Probenbehälter 4, eine Gas-Rückführungsvorrichtung 9, zum Rückführen von Restdampf, der ggf. mit dem Spülgas vermischt ist und eine elektrische Steuereinrichtung zum Steuern der Vorrichtung 1 und Regeln der Heizleistung.

Sofern mehrere Probenbehälter 4 vorhanden sind, sind sie prinzipiell einander gleich und vorzugsweise identisch ausgebildet, so daß im folgenden nur ein Probenbehälter 4 beschrieben wird. Der Probenbehälter 4 besteht aus einem topfförmigen Behälterunterteil 12, einem darauf aufsetzbaren Deckel 13 und einem in das Behälterunterteil 12 einsetzbaren, topfförmigen Proben-Aufnahmebehälter 14, der mittels einem Stützteil, hier einem auf einer Randschulter des Behälterunterteils 12 aufliegenden Flansch 15 so im Behälterunterteil 12 abstützbar ist, daß er sich mit seinem Bodenteil 16 in einem Abstand über dem Boden 17 des Behälterunterteils 12 befindet. Die Querschnittsform und- größe des Aufnahmebehälters 14 ist so bemessen, daß wenigstens ein Kanal, vorzugsweise ein freier Ringraum zwischen dem Aufnahmebehälter 14 und dem Behälterunterteil 12 besteht. Im Bodenteil 16 des Aufnahmebehälters 14 ist eine Ablauföffnung 18 vorgesehen, die auch durch eine Perforation gebildet sein kann. Die mit 19 bezeichnete Probe bzw. Probenmaterial wird vorzugsweise in einem perforierten Korb 21 in den Aufnahmebehälter 14 von oben eingestellt.

Der Probenbehälter 4 mit seinen Einzelteilen besteht aus mikrowellendurchlässigem Material, vorzugsweise Kunststoff. Als Material eignet sich vorzugsweise Polytetrafluorethylen (PTFE/Teflon) oder Tetrafluormischpolymerisat (TFM) oder auch Quarz, Keramik oder Glas. Das Behälterunterteil 12, der Deckel 13 und/oder der Aufnahmebehälter 14 können aus einem Mikrowellen teilabsorbierendem Material bestehen, um unter der Mikrowellenbestrahlung eine indirekt wirksame Heizung im Probenbehälter 4 zu bilden. Hierzu eignet sich vorzugsweise ein Kunststoff, in dem Materialteile, wie Partikel aus Mikrowellen absorbierendem Material, insbesondere Graphit, eingemischt oder legiert sind. Ein solcher Kunststoff ist unter der Bezeichnung Weflon an sich bekannt.

Im übrigen können das Heizgerät 2 und/oder der oder die Probenbehälter 4 von der in der DE 42 23 116 A1 oder der älteren Patentanmeldung P 44 19 648.2 entnehmbaren Ausgestaltung sein. Um Wiederholungen zu vermeiden, wird auf diese Ausgestaltungen in vollem Umfang Bezug genommen.

Die Absaugvorrichtung 5 umfaßt eine Saugleitung 25, die sich vom oberen Bereich des Frei- bzw. Sammelraums 26 zwischen dem Behälterunterteil 12 und dem Aufnahmebehälter 14 zu einer außerhalb der Heizkammer 3 angeordneten Pumpe 27 erstreckt und dabei vorzugsweise den Deckel 13 dicht durchsetzt nach vorheriger Durchsetzung des Flansches 15 und anschließender Durchquerung der Heizkammer 3 und des sie umgebenden Gehäuses 3a des Heizgerätes 2. Die Pumpe 27 besteht vorzugweise aus resistentem Material, insbesondere Kunststoff, z.B. PTFE, und sie ist zwischen der Saugleitung 25 und einer Weiterführungsleitung 28 angeordnet, wobei es sich um eine solche Pumpe handelt, die in der Saugleitung 25 einen Unterdruck, z.B. 0 bis 1000 mbar, und in der Weiterführungsleitung 28 einen Überdruck zu erzeugen vermag. Die Weiterführungsleitung 28 erstreckt sich zu einem Kondensat-Kühler 29 mit einem Kühlgehäuse 31 und einem in seinem unteren Bereich angeordneten Kondensat-Sammelgehäuse 32. Die Weiterführungsleitung 28 erstreckt sich im Kühlgehäuse 31 in Form einer Kühlschlange, hier einer Kühlwendel 33 vorzugsweise von oben nach unten, wobei sie in die Sammelkammer 32 frei ausmündet. An das Kühlgehäuse 31 ist eine Zuführungsleitung 34 und eine Abführungsleitung 35 für ein vorzugsweise flüssiges Kühlmittel, wie z.B. Wasser angeschlossen. Der Kondensat-Kühler 29 ist vorzugsweise prinzipiell oder identisch von der im DE-U-93 11 578 der Anmelderin beschriebenen Bau- und Funktionsweise.

Vom unteren Bereich des Kondensat-Sammelgehäuses 32 erstreckt sich eine Rückführungsleitung 36 als Teil der Kondensat-Rückführungsvorrichung 7 bis in den Probenaufnahmebehälter 14, insbesondere von oben, wobei sie das Gehäuse 3a, die Heizkammer 3 und den Deckel 13 durchsetzt und insbesondere mittig in den Freiraum 14a des Aufnahmebehälters 14 mündet.

Vom oberen Bereich des Kondensat-Sammelgehäuses 32 erstreckt sich eine zweite Rückführungsleitung 37 von einem Leitungsanschluß 37a als Teil der Gas-Rückführungsvorrichtung 9 in den Freiraum 14a des Aufnahmebehälters 14, wobei vorzugsweise die Rückführungsleitung 36 und die Rückführungsleitung 37 insbesondere vor dem Gehäuse 3a zu einer gemeinsamen Rück- bzw. Zuführungsleitung 38 zusammengeführt sind, die in vorbeschriebener Weise in den Aufnahmeraum 14a des Aufnahmebehälters 14 mündet. In der Rückführungsleitung 37 ist vorzugsweise in deren Anfangsbereich ein Druckminder- oder Überdruckventil 39 und im weiteren Verlauf ein Ventil 41 und ein Strömungsmengenmesser 42, insbesondere mit einem Schwebekörper 43 (Kugel) und einer Skala 44 hinter einer durchsichtigen Wandung 45 angeordnet. Vor oder hinter dem Ventil 41 ist eine Zuführungsleitung 46 als Teil der Gaszuführungsvorrichtung 8 an die Rückführungsleitung 37 angeschlossen. Die gemeinsame Weiterführungsleitung 47 mündet in die gemeinsame Rückführungsleitung 38, die für das durch die Zuführungsleitung 46 zugeführte Gas zugleich Zuführungsleitung ist.

Die Kondensat-Rückführungsvorrichtung 7 weist ein vorzugsweise einstellbares Bauteil als Drossel 48 in Form eines Ventils oder vorzugsweise einer Pumpe, insbesondere einer Schlauchpumpe 49 auf, die in der Nähe des Endes der Rückführungsleitung 36 vorzugsweise außerhalb des Gehäuses 3a und vor dem Verbindungspunkt mit der Leitung 47 in der Rückführungsleitung 36 angeordnet ist. Aufgrund des Vorhandenseins der Drossel 48 erzeugt die Pumpe 27 ausgangsseitig einen Überdruck, der größer als 1 bar ist, vorzugsweise 1,5 bis 10 bar. Dieser Druck ergibt sich aus der Förderleistung der Pumpe 27 und der Größe des Drosselquerschnitts der Drossel 48 bzw. der Förderleistung der Pumpe 49, die entsprechend zu bemessen sind.

Die vorbeschriebenen steuerbaren Funktionsteile der Vorrichtung 1 sind durch Steuer-bzw. Signalleitungen mit der Steuervorrichtung 11 verbunden. Hierzu kann auch ein Temperaturmesser 51 am Probenbehälter 4 gehören, wobei eine Steuer- oder Regeleinrichtung für die Heizleistung so funktioniert, daß beim Überschreiten einer bestimmten Temperatur im Probenbehälter 4 die Heizleistung abgeschaltet und beim Unterschreiten einer bestimmten Temperatur wieder eingeschaltet wird oder unter Berücksichtigung einer Solltemperatur und der jeweiligen Isttemperatur die Heizleisung bekannterweise geregelt wird.

Im Betrieb der Vorrichtung 1 wird das Heizgerät 2 eingeschaltet und ein geeignetes bei Normaldruck flüssiges Lösungsmittel durch die gemeinsame Rückführungsleitung 38 zugeführt, das auf die Probe 19 tropft, den zu extrahierenden Stoff herauslöst und mit dem Stoff in den Sammelraum 26 herunterfließt, in dem es verdampft. Der Lösungsmittel-Dampf wird durch die Saugleitung 25 abgesaugt, im allgemeinen mit 53 bezeichnten Druckkondensationssystem gekühlt und kondensiert und durch die Rückführungsleitung 36 in den Probenbehälter 4 im Kreislauf rückgeführt.

Nach Abschaltung der Kondensat-Rückführungsvorrichtung 7 und ggf. Abschaltung der Gas-Rückführungsleitung 37 kann die Vorrichtung bei Aufrechterhaltung der Funktion der Gas-Zuführungsvorrichtung 8 und ggf. der Gas-Rückführungsvorrichtung 8 auch zum Trocknen von Proben 19 oder zum Trocknen vor oder nach einer vorbeschriebenen Extraktion benutzt werden. Beim Trocknungsvorgang werden Feuchtigkeits-, insbesondere Wasserdämpfe abgesaugt, vorzugsweise kondensiert und abgeführt.

Das oder ein bestimmtes Signal des Strömungsmengenmessers 42 kann dazu benutzt werden, anzuzeigen, daß insbesondere beim Trocknen der Verdampfungsvorgang beendet ist, wobei die Heizung abgeschaltet werden kann.

Auch bei der erfindungsgemäßen Ausführungsform kondensiert der aus dem Probenbehälter 4 abgesaugte Lösungsmitteldampf nicht vollständig in dem Kondensat-Kühler 29. Am Ausgang des Kühlers 29 ist daher das Überdruck-Ventil 39 vorgesehen, welches den Austritt von Lösungsmitteldampf aus dem Kühler 29 erlaubt, wenn ein bestimmter Druck überschritten wird. In der Rückführungsleitung 37 bzw. gemeinsamen Weiterführungsleitung 47 kann der Lösungsmitteldampf unter Normaldruck stehen, aufgrund der Verbindung mit der Luftzufuhr oder einer Gas-, insbesonder Inertgasquelle. Dadurch kann sich der Lösungsmitteldampf in der Rückführungsleitung 37 gegenüber dem Kühler 29 nach der Kondensation in starkem Maße entspannen, mit der Folge, daß die Dichte der Lösungsmittel-Dampfmoleküle in dieser Leitung äußerst gering ist. Das Gas ist dementsprechend als "trocken" anzusehen. Dies ist wichtig, weil es für den Trocknungsprozess der Probe verwendet werden kann. Beim Trocknungsprozess wird das Ventil 41 mit vorzugsweise verstellbarem Durchlaßquerschnitt geöffnet, d.h. dem beheizbaren Raum und der darin befindlichen Probe wird unter Atmosphärendruck stehendes inertes Spülgas zugeführt, das mit geringen Mengen von Lösungsmitteldampf versehen ist. Im Probenbehälter 4 herrscht dann Normaldruck. Gleichzeitig sollte (muß aber nicht) beim Trocknen die Lösungsmittelpumpe 49 zur Unterbindung eines Lösungsmittels gestoppt werden. Bei dem Trocknungsprozess, der in der älteren Anmeldung P 44 19 648.2, insbesondere S. 18, vierter Absatz beschrieben ist, wird die Probe erhitzt und der bei Erhitzung der Probe entstehende Wasserdampf wird durch das Spülgas aus der Probe herausgespült und abgesaugt. Wenn der Wasserdampf aus dem Lösungsmittel abgeschieden werden soll, kann durch einen Auslaß durch die Leitung 46 erfolgen. Der Wasserdampf wird dann an die Umgebung abgegeben (was nicht umweltschädlich ist). Die Trocknung erfolgt hier also bei einem gegen Normaldruck hin tendierenden Druck im Probenbehälter 4. Die Lösungsmittelpumpe 49 sorgt jedoch immer noch für einen-wenn auch verringerten - Unterdruck im Probenbehälter 4. Wenn von der Probe 19 wenig Wasserdampf abgegeben wird, kann die Verbindung zur Umgebung durch die Leitung 46 geschlossen werden. Die Anreicherung des Lösungsmittels mit Wasser ist in diesem Fall vernachlässigbar gering. Gleichzeitig wird aber wegen des starken Unterdrucks (Vakuum) im Probenbehälter 4 der Wirkungsgrad beim Trocknen erheblich erhöht.

Die Vorrichtung 1 umfaßt somit einen geschlossenen Kreislauf für die Lösungsmittel-Extraktion aus dem Druckkondensationssystem 52. Aufgrund des Unterdrucks im Probenbehälter 4 (0 bis etwa 1000 mbar) wird eine schnelle Vakuum-Verdampfung des Lösungsmittels erreicht, wobei mit der korrosionresistenten Pumpe 27 der Lösungsmitteldampf verdichtet wird. Hierdurch wird der Siedepunkt erhöht und eine wesentlich höhere Dampfkonzentration und Ausbeute erreicht. Es kann mit einer Lösungsmittelvorgabe (definierte Menge) beliebig oft extrahiert werden, wobei der im Kreislauf direkt wirksamen Lösungsmittelzufuhr die peristatische Pumpe 49 als eine Dosiervorrichtung für eine bestimmte Dosierung wirken kann. Entsprechend ist die Pumpe 49 oder auch Drossel 48 zu steuern. Hierdurch ist eine zu große Zuführungsmenge oder ein Überlaufen der Lösungsmittelzuführung ausgeschlossen. Während der Extraktion kann der Unterdruck, z.B. 100 bis 300 mbar, auf Normalluftdruck, ca. 1000 mbar geregelt werden. Der Druck auf der Kondensationsseite bleibt aufgrund der Wirkung des Überdruckventils 39 konstant. Während des Extraktionsvorganges wird bei dem im Probenbehälter 4 erzeugten Unterdruck oder auch bei Normaldruck eine bessere Extraktionswirkung aufgrund der Beheizung (bessere Löslichkeit im heißen Lösungsmittel ) erzielt, da höhere Lösungsmitteltemperaturen erreichbar sind. Dabei hat das Beheizen des Lösungsmittels ein höheres Lösungsvermögen zur Folge. Die Erwärmung von unpolaren Lösungsmitteln der Mikrowellenbestrahlung wird durch einen Aufnahmebehälter 14 und/oder ein Behälterunterteil 12 aus Mikrowellen teilabsorbierendem Material gewährleistet, wie es bereits beschrieben worden ist.

Ein weiterer Vorteil beim Trocknungsvorgang bietet die permantente Zufuhr des Feuchtigkeits- und Lösungsmittel-trockenen Expansionsgases, das hinter dem Überdruckventil 39 entsteht und zur Einlaßseite in den Probenbehälter 4 geleitet wird. Das "trockene" Gas ergibt eine bessere Trocknungseffizienz durch Gasextraktion (Spülung mit trockenem Gas). Mithilfe der Gasströmungsmeß- und Regeleinheit 42 kann der Unterdruck durch die entsprechende Steuerung oder Regelung der Heizung definiert eingestellt werden, wobei durch Druckabfall auch der Verdampfungsendpunkt feststsellbar ist, wenn kein Lösungsmittel mehr verdampft wird, bzw. die Konzentration des Lösungsmitteldampfes abnimmt.

Bei Proben 19 mit einem hohen Wasseranteil oder unerwünschten Lösungsmitteln kann der Dampf imVorlauf durch einen schaltbaren Abzweig, z.B. ein Zwei-Wegeventil 53 zur Abtrennung kanalisiert werden, wodurch eine unerwünschte Vermischung vermieden wird.

Beim Vorhandensein mehrerer Probenbehälter 4 können durch entsprechende Mehrkanalpumpen 27, 49 die vorhandenen Probenbehälter 4 gleichzeitig abgesaugt und mit Lösungmittel beschickt werden.

Im Rahmen der Erfindung ist es möglich, durch den Einsatz von mehreren Pumpen 27 und jeweils zwischengeschalteten Kondensat-Kühlern 29 den Wirkungsgrad selbst bei schwierigen Lösungsmitteln und leicht kondensierbaren Gasen, wie z.B. CO₂/N₂O oder dergleichen auf nahezu 100% zu verbessern.

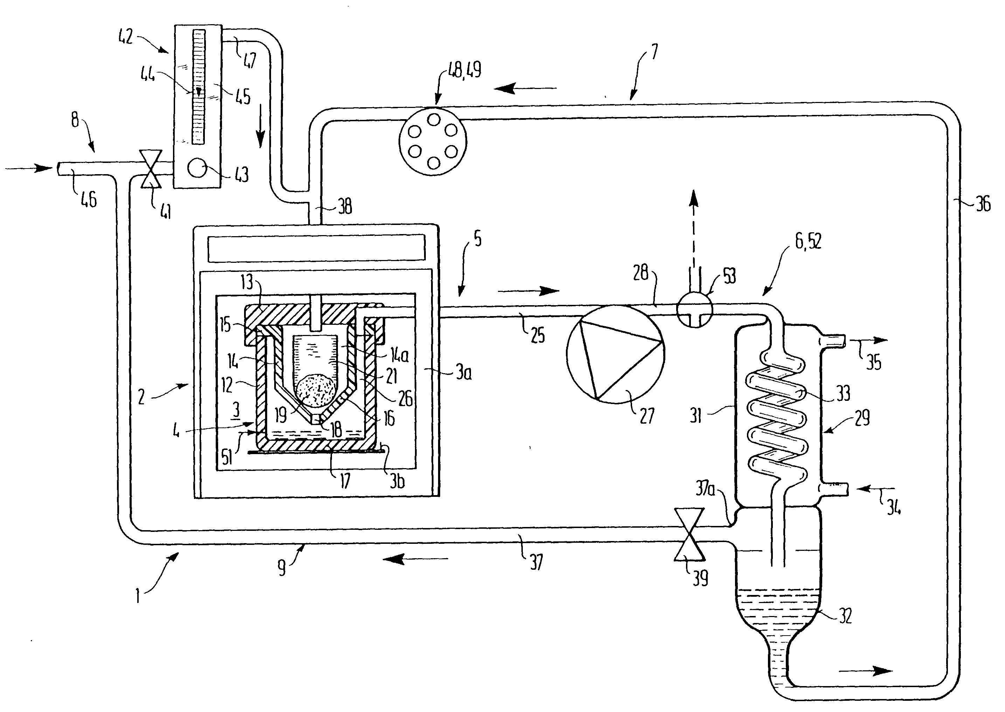

## Patentansprüche

1. Verfahren zur Extraktions-Behandlung einer Probe (19) mit einem bei normaler Umgebungstemperatur und Normaldruck flüssigen Lösungsmittel,
bei dem das Lösungsmittel in einen, vorzugsweise beheizbaren, Probenraum eingeführt und dort mit der Probe (19) in Verbindung gebracht wird,
bei dem im Probenraum entstehender Lösungsmittel-Dampf durch eine Saugleitung (25) und eine darin angeordnete Saugpumpe (27) aus dem Probenraum abgesaugt wird, derart, daß in dem Probenraum ein Unterdruck entsteht und ein weiterer Teil des flüssigen Lösungsmittels in die Dampfphase übergeht,
bei dem der abgesaugte Lösungsmittel-Dampf durch eine Weiterführungsleitung (28) in einen außerhalb des Probenraums angeordneten Kondensations-Kühler (29) geleitet wird, gekühlt wird und dadurch zwecks Wiedergewinnung von reinem Lösungsmittel zumindest teilweise wieder in die flüssige Phase überführt wird,
und bei dem das Kondensat durch eine Rückführungsleitung (36) dem Probenraum wieder zugeführt wird.
**dadurch gekennzeichnet,**
**daß** eine Saugpumpe (27) verwendet wird, die an ihrem Ausgang einen Überdruck erzeugt und zwischen dem Probenraum (14a) und dem Kondensat-Kühler (29) eingeschaltet ist,
und **daß** der abgesaugte Lösungsmittel-Dampf durch das Zusammenwirken der Saugpumpe (27) und eines Bauteils mit Ventilwirkung, das stromab des Kondensat-Kühlers (29) in der Rückführungsleitung (36) angeordnet ist, unter Überdruck gesetzt wird.

2. Verfahren nach Anspruch 1,
bei dem das Lösungsmittel kontinuierlich oder diskontinuierlich dosiert zugeführt wird,
**dadurch gekennzeichnet,**
**daß** das wiedergewonnene Lösungsmittel direkt wieder ohne Zwischenspeicherung in den Probenraum (14a) eingeführt wird, derart, daß ein geschlossener Lösungsmittel-Kreislauf entsteht.

3. Verfahren nach Anspruch 1 oder 2,
**dadurch gekennzeichnet,**
**daß** auch nach der Kühl- und Überdruckbehandlung des abgesaugten Lösungsmitteldampfes noch in der Dampfphase verbleibendes Lösungsmittel auf Normaldruck entspannt und dem Probenraum (14a, 26) ggf. mit zusätzlichem Gas, z.B. Umgebungsluft oder vorzugsweise Inertgas, wieder zugeführt wird.

4. Verfahren nach Anspruch 3,
**dadurch gekennzeichnet,**
**daß** bei der Zuführung des auf Normaldruck entspannten Lösungsmitteldampfes ggf. mit zusätzlichem Gas die Lösungsmittel-Zuführung teilweise oder vollständig unterbrochen wird, insbesondere um sich in der Probe (19) bildende und von dieser abgegebene Dämpfe, insbesondere Wasserdampf, zu extrahieren (Trocknungsprozeß).

5. Vorrichtung zur Durchführung des Verfahrens nach einem der vorherigen Ansprüche,
mit einem Gerätegehäuse (3a), das einen hohlen, vorzugsweise beheizbaren, Raum aufweist, in dem ein Probenraum (14a) angeordnet ist, in den eine Probe (19) einbringbar ist, mit einer in den Probenraum (14a) mündenden Leitung (36, 38) zum Zuführen eines bei Normaldruck und bei normaler Umgebungstemperatur flüssigen Lösungsmittels, mit einer mit dem Probenraum (14a, 26) verbundenen Absaugleitung (25), mit einem an die Absaugleitung (25) angeschlossenen Kondensat-Kühler (29) und mit einer Saugpumpe (27) zum Absaugen von in dem Probenraum (14a, 26) entstehenden Lösungsmitteldampf und zum Erzeugen von Unterdruck im Probenraum (14a, 26), welcher den Übergang von flüssigem Lösungsmittel in die Dampfphase fördert, **dadurch gekennzeichnet, daß** die Saugpumpe (27) in der Absaugleitung (25) zwischen dem Probenraum (14a, 26) und dem Kondensat-Kühler (29) eingeschaltet ist, wobei ihr Eingang mit dem Probenraum (26) und ihr Ausgang mit dem Kondensat-Kühler (29) verbunden ist,
die an ihrem Ausgang im Zusammenwirken mit einem Bauteil mit Ventilwirkung einen Überdruck erzeugt, wobei das Bauteil in einer Rückführungsleitung (36) eingeschaltet ist, die einen Sammelbehälter (32) des Kondensat-Kühlers (29) mit dem Probenraum verbindet.

6. Vorrichtung nach Anspruch 5,
**dadurch gekennzeichnet,**
**daß** das Bauteil ein Ventil oder eine Drossel (48) oder eine Pumpe oder eine Schlanchpumpe (49) ist.

7. Vorrichtung nach der Anspruch 5 oder 6,
**dadurch gekennzeichnet,**
**daß** das Bauteil steuerbar ist.

8. Vorrichtung nach einem der Ansprüche 5 bis 7
**dadurch gekennzeichnet,**
**daß** diejenigen Teile des Bauteils oder der Saugpumpe (27), die mit dem Lösungsmittel in Kontakt kommen, aus inertem Material bestehen.

9. Vorrichtung nach einem der Ansprüche 5 bis 8,
**dadurch gekennzeichnet,**
**daß** der Sammelbehälter (32) des Kondensat-Kühlers (29) über eine Verbindungsleitung (36) mit der Leitung (38) zum Zuführen des Lösungsmittels verbunden ist.

10. Vorrichtung nach Anspruch 9,
bei der der Sammelbehälter (32) des Kondensat-Kühlers (29) mit einem Gas-Ausgangsanschluß (37a) für noch in der dampfförmigen Phase befindliches Lösungsmittel versehen ist,
**dadurch gekennzeichnet,**
**daß** der Gas-Ausgangsanschluß (37a) des Kondensat-Kühlers (29) über eine Abströmleitung (37) mit der Leitung (38) zum Zuführen des Lösungsmittels oder direkt mit dem Probenraum (14a) verbunden ist, und daß in die Abströmleitung (37) ein Druckminderventil (39) eingeschaltet ist.

11. Vorrichtung nach Anspruch 10,
**dadurch gekennzeichnet,**
**daß** das Druckminderventil (39) ein Überdruckventil ist, welches anspricht, wenn der Druck im Kondensat-Kühler (29) einen vorbestimmten Maximaldruck überschreitet.

12. Vorrichtung nach Anspruch 10 oder 11,
**dadurch gekennzeichnet,**
**daß** die Abströmleitung (37) in Strömungsrichtung des Lösungsmitteldampfes stromabwärts von dem Druckminderventil (39) zu der Umgebung hin offen oder mit einer Gas-, insbesondere Inertgas-Quelle verbunden ist.

13. Vorrichtung nach Anspruch 12,
**dadurch gekennzeichnet,**
**daß** die Abströmleitung (37) in Strömungsrichtung des Lösungsmitteldampfes stromabwärts von der Stelle, wo die Abströmleitung (37) zur Umgebung hin offen ist oder mit der Gasquelle verbunden ist, ein weiteres Ventil (41), insbesondere mit veränderlichem Strömungsquerschnitt, und ggf. noch einen Gasflußmesser (42) enthält.

14. Vorrichtung nach einem der Ansprüche 5 bis 13,
**dadurch gekennzeichnet,**
**daß** in die Absaugleitung (25) zwischen die Saugpumpe (27) und dem Kondensat-Kühler (29) ein Ventil, vorzugsweise ein Zweiwege-Ventil (53) geschaltet ist.

15. Vorrichtung nach einem der Ansprüche 5 bis 14,
**dadurch gekennzeichnet**,
die sich zwischen der Saugpumpe (27) und dem Kondensat-Kühler (29) erstreckende Leitung in einem von einem Kühlmittel durchströmbaren Kühlergehäuse (31) als vorzugsweise gewendelte Kühlschlange fortsetzt.

16. Vorrichtung nach einem der Ansprüche 5 bis 15,
**dadurch gekennzeichnet,**
**daß** der oder die Probenbehälter (4) jeweils ein topfförmiges Behälterunterteil (12), einen darauf aufsetzbaren dichten Deckel (13) und ein in das Behälterunterteil (12) einsetzbaren Aufnahmebehälter (14) für die Probe (19) aufweisen, wobei zwischen dem Behälterunterteil (12) und dem Aufnahmebehälter (14) ein Sammelraum (26) für Lösungsmittel angeordnet ist, der sich vorzugsweise bis zum oberen Rand des Behälterunterteils (12) erstreckt und mit der Absaugleitung (25) verbunden ist.

17. Vorrichtung nach einem der Ansprüche 5 bis 16,
**dadurch gekennzeichnet,**
**daß** die Saugleitung (25) und die Leitung (38) zum Zuführen von Lösungsmittel sich durch den Deckel (13) erstrecken.

18. Vorrichtung nach einem der Ansprüche 5 bis 17,
**dadurch gekennzeichnet,**
**daß** das Behälterunterteil (12) und/oder der Deckel (13) und/oder der Aufnahmebehälter (14) aus Mikrowellen teilabsorbierendem Material, insbesondere Kunststoff, besteht, bzw. bestehen.

## Claims

1. Process for the extraction-treatment of a sample (19) with a solvent liquid at standard ambient temperature and standard pressure,
in which the solvent is introduced into a preferably heated sample chamber and there combined with the sample (19),
in which solvent vapour arising in the sample chamber is sucked off out of the sample chamber through a suction line (25) and by a suction pump (27) arranged therein, in such a way that a partial vacuum is produced in the sample chamber and a further part of the liquid solvent passes over into the vapour phase, in which the solvent vapour sucked off is passed through a forwarding line (28) into a condensation cooler (29) arranged outside the sample chamber, is cooled and is thereby converted at least partially again into the liquid phase for the recovery of pure solvent,
and in which the condensate is fed to the sample chamber through a return line (36),
**characterised in that**
a suction pump (27) is used which generates an excess pressure at its outlet and is interpolated between the sample chamber (14a) and the condensate cooler (29),
and that the solvent vapour sucked off is placed under excess pressure by the interaction of the suction pump (27) and a component with valve effect, which is arranged in the return line (36) downstream of the condensate cooler (29).

2. Process according to claim 1,
in which the solvent is supplied proportioned continuously or discontinuously,
**characterised in that**
the recovered solvent is introduced directly again into the sample chamber (14a) without intermediate storage in such a way that a closed solvent circuit is obtained.

3. Process according to claim 1 or 2,
**characterised in that**
solvent still remaining in the vapour phase after the cooling and excess pressure treatment of the solvent vapour sucked off is also expanded to standard pressure and is fed again to the sample chamber (14a, 26) optionally with additional gas, e.g. ambient air or preferably inert gas.

4. Process according to claim 3,
**characterised in that**
during the feeding of the solvent vapour expanded to standard pressure, optionally with additional gas, the solvent feeding is partly or completely interrupted, in particular in order to extract vapours, in particular water vapour, forming in the sample (19) and given off by the latter (drying process).

5. Apparatus for carrying out the process according to one of the previous claims,
with an equipment housing (3a) that comprises a hollow, preferably heated, chamber, in which a sample chamber (14a) is arranged into which a sample (19) is introducible, with a line (36, 38) issuing into the sample chamber (14a) for the feeding of a solvent liquid at standard pressure and at standard ambient temperature, with a suction line (25) connected to the suction chamber (14a, 26), with a condensate cooler (29) connected to the suction line (25) and with a suction pump (27) for sucking off solvent vapour arising in the sample chamber (14a, 26) and for generating a partial vacuum in the sample chamber (14a, 26), which promotes the passing over of liquid solvent into the vapour phase,
**characterised in that**
the suction pump (27) is interpolated in the suction line (25) between the sample chamber (14a, 26) and
the condensate cooler (29), wherein its inlet is connected to the sample chamber (26) and its outlet to the condensate cooler (29),
which [pump] generates an excess pressure at its outlet in interaction with a component with valve effect, wherein the component is interpolated in a return line (36) which connects a collection tank (32) of the condensate cooler (29) to the sample chamber.

6. Apparatus according to claim 5,
**characterised in that**
the component is a valve or a constrictor (48) or a pump or a hose pump (49).

7. Apparatus according to claim 5 or 6,
**characterised in that**
the component is controllable.

8. Apparatus according to one of claims 5 to 7,
**characterised in that**
those parts of the component or of the suction pump (27) that come into contact with the solvent consist of inert material.

9. Apparatus according to one of claims 5 to 8,
**characterised in that**
the collection tank (32) of the condensate cooler (29) is connected by a connecting line (36) to the line (38) for the feeding of the solvent.

10. Apparatus according to claim 9,
in which the collecting tank (32) of the condensate cooler (29) is provided with a gas outlet connection (37a) for solvent still in the vaporous phase,
**characterised in that**
the gas outlet connection (37a) of the condensate cooler (29) is connected by an escape line (37) to the line (38) for the feeding of the solvent or directly to the sample chamber (14a), and that a pressure-reducing valve (39) is introduced into the escape line (37).

11. Apparatus according to claim 10,
**characterised in that**
the pressure-reducing valve (39) is a pressure relief valve, which responds when the pressure in the condensate cooler (29) exceeds a pre-determined maximum pressure.

12. Apparatus according to claim 10 or 11,
**characterised in that**
the escape line (37) is in the flow direction of the solvent vapour, downstream of the pressure-reducing valve (39), open towards the environment or connected to a gas, in particular to an inert gas, source.

13. Apparatus according to claim 12,
**characterised in that**
the escape line (37) contains in the flow direction of the solvent vapour, downstream of the point where the escape line (37) is open towards the environment or is connected to the gas source, a further valve (41), in particular with variable flow cross-section, and optionally also a gas flow meter (42).

14. Apparatus according to one of claims 5 to 13,
**characterised in that**
a valve, preferably a two-way valve (53), is connected into the suction line (25) between the suction pump (27) and the condensate cooler (29).

15. Apparatus according to one of claims 5 to 14,
**characterised in that**
the line extending between the suction pump (27) and the condensate cooler (29) continues, as a preferably spiral-shaped cooling coil, in a cooler housing (31) flowed through by a coolant.

16. Apparatus according to one of claims 5 to 15,
**characterised in that**
the sample container or containers (4) each comprise a pot-shaped container bottom part (12), a sealed lid (13) positionable thereon and a receiving container (14) insertable into the container bottom part (12) for the sample (19), wherein between the container bottom part (12) and the receiving container (14) is arranged a collection chamber (26) for solvent, which preferably extendsu up to the top edge of the container bottom part (12) and is connected to the suction line (25).

17. Apparatus according to one of claims 5 to 16,
**characterised in that**
the suction line (25) and the line (38) for the feeding of solvent extend through the lid (13).

18. Apparatus according to one of claims 5 to 17,
**characterised in that**
the container bottom part (12) and/or the lid (13) and/or the receiving container (14) consists or consist of material partially absorbing microwaves, in particular plastic.

## Revendications

1. Procédé pour le traitement d'extraction d'un échantillon (19) avec un solvant liquide à température ambiante normale et à pression normale,
dans lequel le solvant est introduit dans un espace d'échantillon, de préférence pouvant être chauffé, et est mis à cet endroit en contact avec l'échantillon (19),
dans lequel la vapeur de solvant produite dans l'espace d'échantillon est aspirée pour être enlevée de l'espace d'échantillon par une conduite d'aspiration (25) et une pompe d'aspiration agencée dans celle-ci (27), de telle sorte qu'il se produit une dépression dans l'espace de l'échantillon et qu'une autre partie du solvant liquide est transférée dans la phase vapeur,
dans lequel la vapeur de solvant aspirée est amenée par une conduite de réacheminement (28) dans un refroidisseur de condensation (29) disposé à l'extérieur de l'espace d'échantillon, pour y être refroidie, et ce faisant, pour récupération de solvant pur, est au moins amenée partiellement à nouveau dans la phase liquide,
et dans lequel le condensat est à nouveau amené par une conduite de retour (36) dans l'espace d'échantillon,
**caractérisé en ce que**
une pompe d'aspiration (27) est utilisée, pompe qui produit une surpression à sa sortie et qui est intercalée entre l'espace d'échantillon (4) et le refroidisseur de condensat (29),
et **en ce que** la vapeur de solvant aspirée est mise en dépression par l'action conjointe de la pompe d'aspiration (27) et d'un composant avec un effet de ventilation qui est disposé en aval du refroidisseur de condensat (29) dans la conduite de retour (36).

2. Procédé selon la revendication 1, dans lequel le solvant est amené de façon dosée en continu ou en discontinu,
**caractérisé en ce que**
le solvant récupéré est introduit directement à nouveau sans stockage intermédiaire dans l'espace d'échantillon (14a), de telle sorte qu'il est créé un cycle de solvant fermé.

3. Procédé selon la revendication 1 ou 2,
**caractérisé en ce que**,
après le traitement de refroidissement et de surpression de la vapeur de solvant aspirée, le solvant restant encore dans la phase vapeur est détendu à la pression normale et est amené à nouveau à l'espace d'échantillon (14a, 26), éventuellement avec un gaz supplémentaire, par exemple de l'air ambiant, ou de préférence un gaz inerte.

4. Procédé selon la revendication 3,
**caractérisé en ce que**,
lors de l'amenée de la vapeur de solvant détendue à la pression normale, éventuellement avec un gaz supplémentaire, l'amenée de solvant est interrompue partiellement ou complètement, notamment pour extraire les vapeurs se formant dans l'échantillon (19) et qui sont dégagées par celui-ci, notamment de la vapeur d'eau (procédé de séchage).

5. Dispositif pour la réalisation du procédé selon l'une des revendications précédentes,
avec un logement d'appareil (3a) qui présente un espace creux, de préférence pouvant être chauffé, dans lequel est disposé un espace d'échantillon (14a), dans lequel peut être introduit un échantillon (19), avec une conduite (36, 38) aboutissant dans l'espace d'échantillon (14a) pour l'amenée d'un solvant liquide à pression normale et à température ambiante normale, avec une conduite d'aspiration (25) raccordée à l'espace d'échantillon (14a, 26), avec un refroidisseur de condensat (29) raccordé à la conduite d'aspiration (25) et avec une pompe d'aspiration (27) pour l'aspiration de la vapeur de solvant générée dans l'espace d'échantillon (14a, 26), et pour produire une dépression dans l'espace d'échantillon (14a, 26) qui favorise le passage du solvant liquide dans la phase vapeur,
**caractérisé en ce que**
la pompe d'aspiration (27) dans la conduite d'aspiration (25) est disposée entre l'espace d'échantillon (14a, 26) et le refroidisseur de condensat (29), son entrée étant reliée à l'espace d'échantillon (26) et sa sortie avec le refroidisseur de condensat (29),
qui à sa sortie produit, en action conjointe avec un composant muni d'un effet de ventilation, une surpression, le composant étant disposé dans une conduite de retour (36) qui relie un collecteur (32) du refroidisseur de condensat (29) à l'espace d'échantillon.

6. Dispositif selon la revendication 5,
**caractérisé en ce que**
le composant est une soupape ou un étrangleur (48) ou une pompe ou encore une pompe à flexible (49).

7. Dispositif selon les revendications 5 ou 6,
**caractérisé en ce que**
le composant peut être commandé.

8. Dispositif selon l'une des revendications 5 à 7,
**caractérisé en ce que**
les parties du composant ou de la pompe d'aspiration (27) qui viennent en contact avec le solvant consistent en un matériau inerte.

9. Dispositif selon l'une des revendications 5 à 8,
**caractérisé en ce que**
le collecteur (32) du refroidisseur de condensat (29) est raccordé par une conduite de liaison (36) avec la conduite (38) pour l'amenée du solvant.

10. Dispositif selon la revendication 9, dans lequel le collecteur (32) du refroidisseur de condensat (29) est muni d'un raccordement de sortie de gaz (37a) pour le solvant se trouvant encore en phase vapeur,
**caractérisé en ce que**
le raccordement de sortie de gaz (37a) du refroidisseur de condensat (29) est raccordé par une conduite d'évacuation (37) avec la conduite (38) pour l'amenée du solvant ou directement avec l'espace d'échantillon (14a), et **en ce qu'**une soupape de réduction d'air (39) est disposée dans la conduite d'évacuation (37).

11. Dispositif selon la revendication 10,
**caractérisé en ce que**
la soupape de réduction de pression (39) est une soupape de surpression qui réagit lorsque la pression dans le refroidisseur de condensat (29) dépasse une pression maximum prédéterminée.

12. Dispositif selon la revendication 10 ou 11,
**caractérisé en ce que**
la conduite d'évacuation (37) dans la direction d'évacuation de la vapeur de solvant est ouverte en aval de la soupape de réduction de pression (39) vers le milieu ambiant ou est raccordée à une source de gaz, en particulier une source de gaz inerte.

13. Dispositif selon la revendication 12,
**caractérisé en ce que**
la conduite d'évacuation (37) dans la direction d'écoulement de la vapeur de solvant en aval de l'endroit où la conduite d'évacuation (37) est ouverte au milieu ambiant ou est raccordée avec la source de gaz, une autre soupape (41), en particulier avec une section d'écoulement variable, et contient éventuellement encore un débitmètre de gaz (42).

14. Dispositif selon l'une des revendications 5 à 13,
**caractérisé en ce que**
dans la conduite d'évacuation (25), entre la pompe d'aspiration (27) et le refroidisseur de condensat (29), est incorporée une soupape, de préférence une soupape à deux voies (53).

15. Dispositif selon l'une des revendications 5 à 4,
**caractérisé en ce que**
la conduite s'étendant entre la pompe d'aspiration (27) et le refroidisseur de condensat (29) se poursuit dans un logement de refroidisseur traversé par le milieu refroidisseur (31), de préférence sous forme de serpentin de refroidissement.

16. Dispositif selon l'une des revendications 5 à 15,
**caractérisé en ce que**
le ou les récipients d'échantillon (14) présentent chaque fois une partie inférieure de récipient en forme de pot (12), un couvercle étanche (13) rabattable sur celui-ci et un récipient collecteur (14) pouvant être incorporé dans la partie inférieure du récipient (12) pour l'échantillon (19), entre la partie inférieure de récipient (12) et le récipient collecteur (14) est disposé un espace de recueil (26) pour le solvant qui, de préférence, s'étend jusqu'au bord supérieur de la partie inférieure de récipient (12) et qui est raccordé à la conduite d'aspiration (25).

17. Dispositif selon l'une des revendications 5 à 16,
**caractérisé en ce que**
la conduite d'aspiration (25) et la conduite (38) pour l'amenée du solvant s'étendent à travers le couvercle (13).

18. Dispositif selon l'une des revendications 5 à 17,
**caractérisé en ce que**
la partie inférieure du récipient (12) et/ou le couvercle (13) et/ou le récipient collecteur (14) consistent en un matériau absorbant partiellement les micro-ondes, en particulier la matière synthétique.
